# EUROPEAN PATENT APPLICATION

(11) **EP 4 141 639 A1**
(43) Date of publication of application: **01.03.2023**
(21) Application number: 22184987.0
(22) Date of filing: 14.07.2022
(51) Int. Cl.: G06F 3/06

(54) **INFORMATION PROCESSING APPARATUS, INFORMATION PROCESSING METHOD, AND INFORMATION PROCESSING PROGRAM**

(30) Priority: 13.08.2021 JP 2021132038
(71) Applicant: FUJIFILM Corporation, Tokyo 106-8620 (JP)
(72) Inventor: OISHI, Yutaka, Tokyo, 106-8620 (JP); KONDO, Michitaka, Tokyo, 106-8620 (JP); OTSUKA, Misaki, Tokyo, 106-8620 (JP); MASUDA, Yuko, Tokyo, 106-8620 (JP)
(74) Representative: Klunker IP Patentanwälte PartG mbB

(57) **Abstract**

In a case of performing control of migrating data from a relatively-old-generation magnetic tape as a migration-source magnetic tape included in one storage pool of the plurality of storage pools to relatively-new-generation magnetic tapes as migration-destination magnetic tapes included in each of the plurality of storage pools, an information processing apparatus excludes, from migration targets, data recorded in a relatively-new-generation magnetic tape included in a storage pool to which the migration-destination magnetic tape belongs.

## Description

### BACKGROUND OF THE INVENTION

### 1. Field of the Invention

The present disclosure relates to an information processing apparatus, an information processing method, and an information processing program.

### 2. Description of the Related Art

JP2015-015047A discloses a technique in which, in a case where data is replicated from a replication source server to a replication destination server, data that is already included in the replication destination server is not duplicated.

### SUMMARY OF THE INVENTION

On the other hand, there is known a technique of configuring a storage pool using a plurality of magnetic tapes and providing a logical volume to a user. In addition, there is also known a technique of multiplexing and storing data by recording the same data in a plurality of storage pools. Further, in a storage system using magnetic tapes, for the purpose of storing data for a long term, increasing a capacity per magnetic tape, and improving a transmission speed, processing of migrating data recorded in an old-generation magnetic tape to a new-generation magnetic tape (hereinafter, referred to as "inter-generation migration processing) is performed.

In a case of performing inter-generation migration processing in a plurality of storage pools in which the same data is recorded and each of which includes a plurality of magnetic tapes, it is considered to perform processing of migrating data from an old-generation magnetic tape of one storage pool to new-generation magnetic tapes included in each of the plurality of storage pools. In this processing, in some cases, a data recording area of the magnetic tape may not be efficiently used.

The present disclosure has been made in view of the above circumstances, and an object of the present disclosure is to provide an information processing apparatus, an information processing method, and an information processing program capable of efficiently using a data recording area of a magnetic tape.

According to an aspect of the present disclosure, there is provided an information processing apparatus including: at least one processor that performs control of migrating data recorded in a plurality of storage pools in which the same data is recorded and each of which includes a plurality of generations of magnetic tapes, in which the processor is configured to, in a case of performing control of migrating data from a relatively-old-generation magnetic tape as a migration-source magnetic tape included in one storage pool of the plurality of storage pools to relatively-new-generation magnetic tapes as migration-destination magnetic tapes included in each of the plurality of storage pools, exclude, from migration targets, data recorded in a relatively-new-generation magnetic tape included in a storage pool to which the migration-destination magnetic tape belongs.

In the information processing apparatus according to the aspect of the present disclosure, the processor may be configured to exclude, from the migration targets, a storage pool in which a total value of free capacities of relatively-new-generation magnetic tapes is smaller than a threshold value among the plurality of storage pools.

Further, in the information processing apparatus according to the aspect of the present disclosure, the threshold value may be set according to capacities of the relatively-new-generation magnetic tapes.

Further, in the information processing apparatus according to the aspect of the present disclosure, the threshold value may be set according to a data size of the migration targets recorded in the migration-source magnetic tape.

Further, according to another aspect of the present disclosure, there is provided an information processing method executed by at least one processor of an information processing apparatus, the processor performing control of migrating data recorded in a plurality of storage pools in which the same data is recorded and each of which includes a plurality of generations of magnetic tapes, the method including: in a case of performing control of migrating data from a relatively-old-generation magnetic tape as a migration-source magnetic tape included in one storage pool of the plurality of storage pools to relatively-new-generation magnetic tapes as migration-destination magnetic tapes included in each of the plurality of storage pools, excluding, from migration targets, data recorded in a relatively-new-generation magnetic tape included in a storage pool to which the migration-destination magnetic tape belongs.

Further, according to still another aspect of the present disclosure, there is provided an information processing program causing at least one processor of an information processing apparatus to execute a process, the processor performing control of migrating data recorded in a plurality of storage pools in which the same data is recorded and each of which includes a plurality of generations of magnetic tapes, the process including: in a case of performing control of migrating data from a relatively-old-generation magnetic tape as a migration-source magnetic tape included in one storage pool of the plurality of storage pools to relatively-new-generation magnetic tapes as migration-destination magnetic tapes included in each of the plurality of storage pools, excluding, from migration targets, data recorded in a relatively-new-generation magnetic tape included in a storage pool to which the migration-destination magnetic tape belongs.

According to the present disclosure, a data recording area of a magnetic tape can be efficiently used.

### BRIEF DESCRIPTION OF THE DRAWINGS

Fig. 1 is a block diagram illustrating an example of a configuration of an information processing system.
Fig. 2 is a block diagram illustrating an example of a hardware configuration of an information processing apparatus.
Fig. 3 is a diagram illustrating an example of a tape management table.
Fig. 4 is a diagram for explaining a storage pool.
Fig. 5 is a diagram for explaining data migration processing from an old-generation magnetic tape to a new-generation magnetic tape.
Fig. 6 is a block diagram illustrating an example of a functional configuration of the information processing apparatus.
Fig. 7 is a flowchart illustrating an example of data migration processing.
Fig. 8 is a diagram for explaining a result of data migration processing.

### DESCRIPTION OF THE PREFERRED EMBODIMENTS

Hereinafter, an example of an embodiment for performing a technique according to the present disclosure will be described in detail with reference to the drawings.

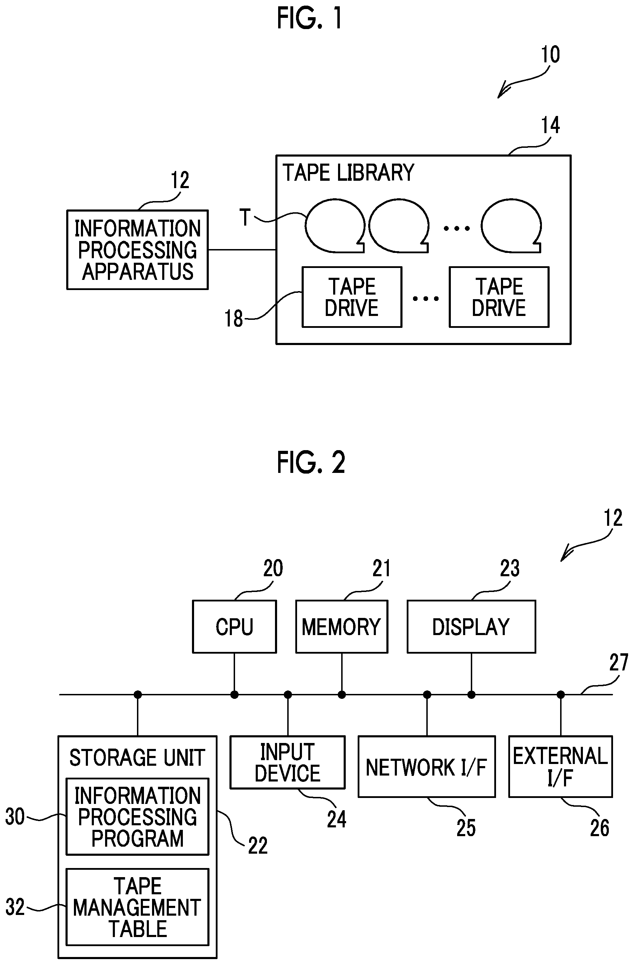

First, a configuration of an information processing system 10 according to the present embodiment will be described with reference to Fig. 1. As illustrated in Fig. 1, the information processing system 10 includes an information processing apparatus 12 and a tape library 14. Examples of the information processing apparatus 12 include a server computer and the like.

The tape library 14 includes a plurality of slots (not illustrated) and a plurality of tape drives 18, and each slot includes a magnetic tape T as an example of a recording medium. Each tape drive 18 is connected to the information processing apparatus 12. The tape drive 18 writes or reads data to or from the magnetic tape T under a control of the information processing apparatus 12. Examples of the magnetic tape T include a linear tape-open (LTO) tape.

In a case where the information processing apparatus 12 writes or reads data to or from the magnetic tape T, the magnetic tape T as a write target or a read target is loaded from the slot into a predetermined tape drive 18. In a case where data is written or read to and from the magnetic tape T loaded into the tape drive 18, the magnetic tape T is unloaded from the tape drive 18 into the slot in which the magnetic tape T is originally included.

Next, a hardware configuration of the information processing apparatus 12 according to the present embodiment will be described with reference to Fig. 2. As illustrated in Fig. 2, the information processing apparatus 12 includes a central processing unit (CPU) 20, a memory 21 as a temporary memory area, and a non-volatile storage unit 22. Further, the information processing apparatus 12 includes a display 23 such as a liquid crystal display, an input device 24 such as a keyboard and a mouse, a network interface (I/F) 25 connected to a network, and an external I/F 26 to which each tape drive 18 is connected. The CPU 20, the memory 21, the storage unit 22, the display 23, the input device 24, the network I/F 25, and the external I/F 26 are connected to a bus 27.

The storage unit 22 is realized by a hard disk drive (HDD), a solid state drive (SSD), a flash memory, or the like. An information processing program 30 is stored in the storage unit 22 as a storage medium. The CPU 20 reads the information processing program 30 from the storage unit 22, develops the read information processing program 30 in the memory 21, and executes the developed information processing program 30.

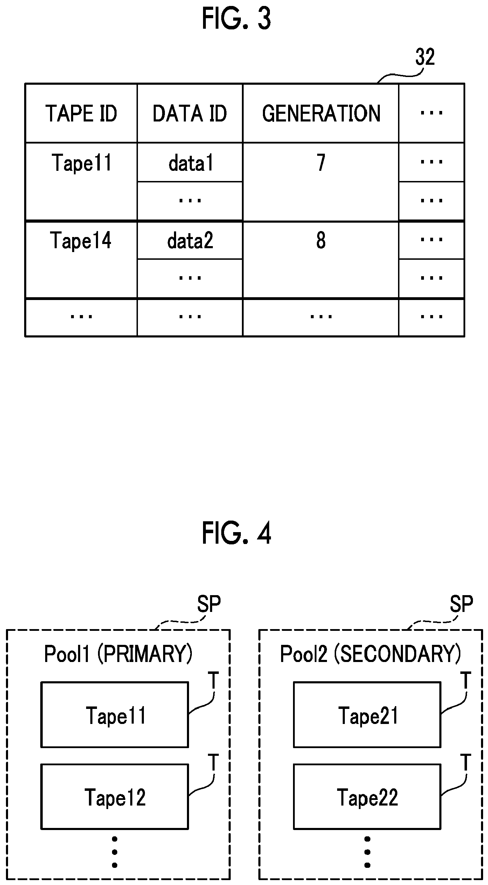

Further, the storage unit 22 stores a tape management table 32 for managing the magnetic tape T. Fig. 3 illustrates an example of the tape management table 32. As illustrated in Fig. 3, the tape management table 32 includes a tape identifier (ID) which is an example of identification information of the magnetic tape T and a data ID which is an example of identification information of the data recorded in the magnetic tape T.

Further, the tape management table 32 also includes information indicating a generation of a standard of the magnetic tape T. The generation of the standard of the magnetic tape T is, for example, LTO7, LTO8, or the like. In the following, the generation of the standard of the magnetic tape T is simply referred to as a "generation". In the tape library 14, a plurality of generations (in the present embodiment, two generations) of magnetic tapes Ts are included. In the following, out of the two generations, a relatively-old generation is referred to as an "old generation", and a relatively-new generation is referred to as a "new generation".

Further, in the information processing system 10 according to the present embodiment, data is recorded with redundancy. Specifically, as an example, as illustrated in Fig. 4, a plurality of storage pool SPs, each including a plurality of magnetic tapes Ts, are prepared. A first storage pool SP is a storage pool SP for primary data, and a second storage pool SP is a storage pool SP for secondary data. The same data is multiplexed and recorded in the two storage pools SPs. That is, a multiplicity is 2. The multiplicity is not limited to 2, and may be 3 or more. Further, each of the two storage pools SPs includes a plurality of generations of magnetic tapes Ts. In a case where data transmitted from a user terminal (not illustrated) is received, the information processing apparatus 12 performs control of recording the data in each of the two storage pools SPs. Normally, data is read from the magnetic tape T included in the storage pool SP for primary data. In a case where data cannot be read from the storage pool SP for primary data, data is read from the magnetic tape T included in the storage pool SP for secondary data.

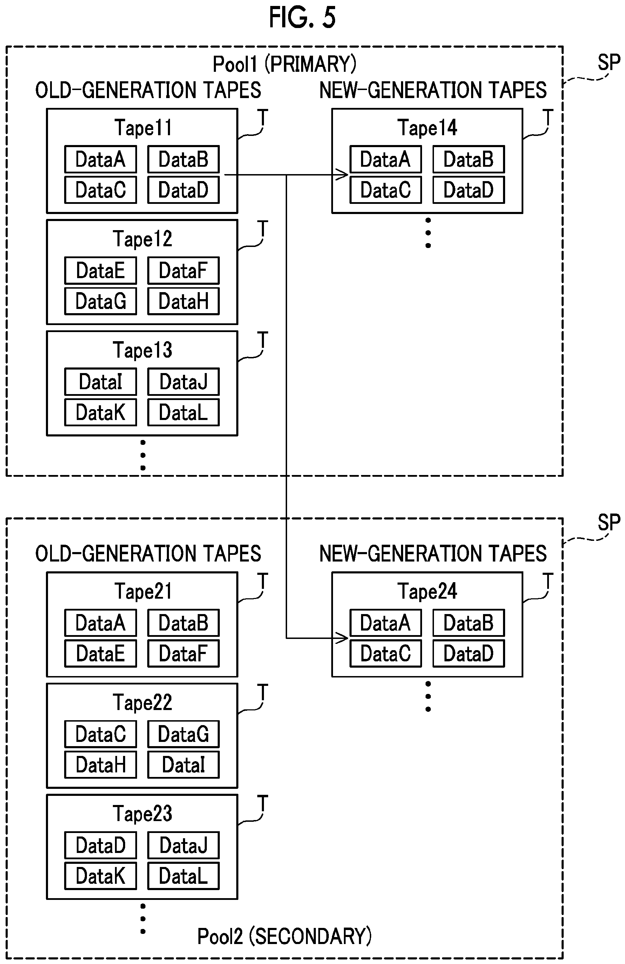

Further, the information processing apparatus 12 performs control of migrating the data recorded in the two storage pools SPs. In the control, the information processing apparatus 12 performs control of migrating data recorded in an old-generation magnetic tape T to a new-generation magnetic tape T. In the present embodiment, as an example, as illustrated in Fig. 5, in the data migration, the information processing apparatus 12 duplicates and migrates data from the old-generation magnetic tape T included in one storage pool SP to the new-generation magnetic tape T included in each of the two storage pools SPs. This is, for example, to shorten a reading time in data migration and to reduce the number of the tape drives 18 used for reading. In the following, processing of duplicating and migrating data from the old-generation magnetic tape T included in one storage pool SP to the new-generation magnetic tape T included in each of the two storage pools SPs is referred to as "inter-generation duplication and migration processing".

Although the same data is recorded in each of the two storage pools SPs, the data is not always recorded in the same physical manner in each storage pool SP. For example, as illustrated in Fig. 5, in the first storage pool SP, "DataA" and "DataC" are recorded in the same magnetic tape T. On the other hand, in the second storage pool SP, "DataA" and "DataC" may be recorded in different magnetic tapes T. This is due to, for example, a difference in data recording density of the magnetic tape T, and a deviation in data recording location on the magnetic tape T by recovery processing of an error occurring when data is recorded in the magnetic tape T.

In this case, in a case where the inter-generation duplication and migration processing is performed, the old-generation magnetic tape T cannot be reused or discarded depending on the storage pool SP. Further, the same data may be recorded in the plurality of magnetic tapes Ts, and as a result, a data recording area of the magnetic tape T may not be efficiently used. In the example of Fig. 5, in "Pool1", all pieces of data recorded in "Tape11" are migrated to "Tape14", and thus "Tape11" can be reused or discarded. On the other hand, in "Pool2", "DataE" and "DataF" recorded in "Tape21" are not migrated to "Tape24", and thus "Tape21" cannot be reused or discarded. As a result, in "Pool2", all pieces of "DataA" to "DataD" are recorded in each of the old-generation magnetic tape T and the new-generation magnetic tape T.

Therefore, the information processing apparatus 12 has a function of, in the inter-generation duplication and migration processing, performing processing such that the same data is not recorded in the plurality of generations of the magnetic tapes T included in each storage pool SP.

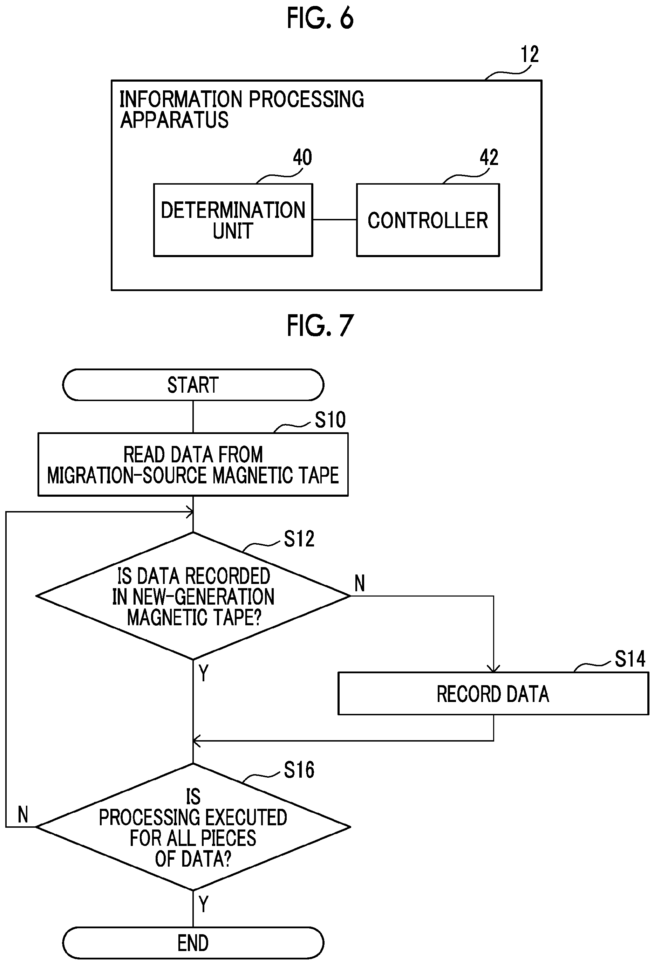

Next, a functional configuration of the information processing apparatus 12 according to the present embodiment will be described with reference to Fig. 6. As illustrated in Fig. 6, the information processing apparatus 12 includes a determination unit 40 and a controller 42. In a case where the CPU 20 executes the information processing program 30, the information processing apparatus 12 functions as the determination unit 40 and the controller 42.

In a case where data is read from a migration-source magnetic tape T under a control of the controller 42, the determination unit 40 determines whether or not the data is recorded in a new-generation magnetic tape T included in the storage pool SP to which the migration-destination magnetic tape T belongs.

The controller 42 performs control of reading, from the migration-source magnetic tape T as an old-generation magnetic tape included in one storage pool SP of the two storage pools SPs (in the present embodiment, the storage pool SP for primary data), all pieces of data recorded in the migration-source magnetic tape T.

Further, the controller 42 excludes, among all pieces of data read by the control, data determined as being recorded in the new-generation magnetic tape T included in the storage pool SP to which the migration-destination magnetic tape T belongs by the determination unit 40, from migration targets. Further, the controller 42 performs control of recording, in the new-generation magnetic tape T, data among all pieces of data read by the control, the data being determined as being unrecorded in the new-generation magnetic tape T included in the storage pool SP to which the migration-destination magnetic tape T belongs by the determination unit 40.

As the migration-source magnetic tape T, for example, among the old-generation magnetic tapes T, a magnetic tape T that is used for a certain period or longer, a magnetic tape T on which reading and writing are performed a certain number of times or more, a magnetic tape T of which an error rate in reading and writing is equal to or higher than a certain value, or the like is selected. Further, as the migration-destination magnetic tape T, among the new-generation magnetic tapes T, a magnetic tape T in which data is unrecorded, a magnetic tape T of which a free capacity is equal to or larger than a certain value, or the like is selected. The migration-destination magnetic tape T may be selected before reading data from the migration-source magnetic tape T, or may be selected after reading data from the migration-source magnetic tape T.

Next, an operation of the information processing apparatus 12 according to the present embodiment will be described with reference to Fig. 7. In a case where the CPU 20 executes the information processing program 30, data migration processing illustrated in Fig. 7 is executed. The data migration processing illustrated in Fig. 7 is executed, for example, at a timing when a data migration instruction is input by a user or at a periodic timing.

In step S10 of Fig. 7, the controller 42 performs control of reading, from the migration-source magnetic tape T as an old-generation magnetic tape included in one storage pool SP of the two storage pools SPs, all pieces of data recorded in the migration-source magnetic tape T. The following processes of step S12 and subsequent steps are sequentially executed for each of pieces of the data read in step S10.

In step S12, the determination unit 40 determines whether or not the data read in step S10 is recorded in the new-generation magnetic tape T included in the storage pool SP to which the migration-destination magnetic tape T belongs. In the present embodiment, the determination unit 40 individually determines whether or not the data is recorded in the new-generation magnetic tape T included in each of the two storage pools SPs. In a case where a determination result in step S12 is NO, the process proceeds to step S14.

In step S14, the controller 42 performs control of recording the data read in step S10 in the new-generation magnetic tape T. In a case where a determination result in step S12 is YES, step S14 is not executed, and the process proceeds to step S16. That is, the data, which is determined as being recorded in the new-generation magnetic tape T included in the storage pool SP to which the migration-destination magnetic tape T belongs, is excluded from migration targets.

In step S16, the determination unit 40 determines whether or not processing of step S12 to step S14 is executed for all pieces of the data read in step S10. In a case where a determination result in step S16 is No, the process returns to step S12, and in a case where a determination result in step S16 is Yes, the data migration processing is ended.

The controller 42 may perform control of initializing the migration-source magnetic tape T after the data migration processing is completed. In this case, the initialized magnetic tape T can be reused. Further, the controller 42 may perform control of unloading the migration-source magnetic tape T from the tape library 14 after the data migration processing is completed. In this case, a new magnetic tape T can be included in the tape library 14 instead of the unloaded magnetic tape T. Further, after the data migration processing is completed, the controller 42 may perform control of initializing the old-generation magnetic tape T from which all pieces of recorded data are recorded to the new-generation magnetic tape T and which is included in the storage pool SP other than the storage pool SP including the migration-source magnetic tape T. Further, after the data migration processing is completed, the controller 42 may perform control of unloading, from the tape library 14, the old-generation magnetic tape T from which all pieces of recorded data are recorded to the new-generation magnetic tape T and which is included in the storage pool SP other than the storage pool SP including the migration-source magnetic tape T.

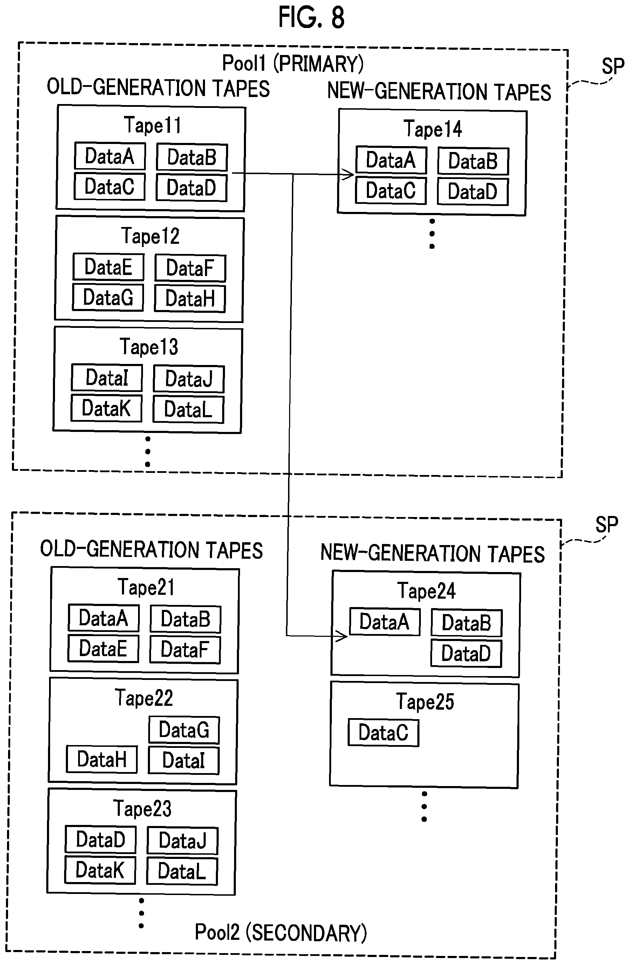

As an example, as illustrated in Fig. 8, a case where pieces of "DataA" to "DataD" recorded in "Tape11" as the migration-source magnetic tape T included in "Pool1" are migrated to the new-generation magnetic tapes T included in "Pool1" and "Pool2" will be described. Further, as illustrated in Fig. 8, a case where pieces of "Data A" to "Data D" recorded in "Tape11" are not recorded in the new-generation magnetic tape T included in "Pool 1" will be described as an example. Further, as illustrated in Fig. 8, a case where only "DataC" among pieces of "DataA" to "DataD" recorded in "Tape11" is recorded in "Tape25" as the new-generation magnetic tape T included in "Pool2" will be described as an example. In this case, in "Pool1", pieces of "DataA" to "DataD" are migrated to the migration-destination magnetic tape "Tape14" as a new-generation magnetic tape T. On the other hand, in this case, in "Pool2", pieces of "DataA", "DataB", and "DataD" are migrated to the migration-destination magnetic tape "Tape24" as a new-generation magnetic tape T, and "DataC" is excluded from migration targets.

As described above, according to the present embodiment, a data recording area of the magnetic tape T can be efficiently used.

In the above embodiment, the controller 42 may exclude, among the plurality of storage pools SPs as data migration destinations, the storage pool SP in which a total value of free capacities of the new-generation magnetic tapes T is smaller than a threshold value, from migration targets. The threshold value in this case may be set according to a capacity of the new-generation magnetic tape T. Specifically, for example, the threshold value is set to the capacity of one new-generation magnetic tape T or the capacity of two new-generation magnetic tapes Ts. Further, the threshold value in this case may be set according to, for example, a data size of the migration targets recorded in the migration-source magnetic tape T. Specifically, for example, the threshold value is set to a value once or twice a data size of the migration targets recorded in the migration-source magnetic tape T.

Further, in the above embodiment, the storage pool SP may include magnetic tapes Ts of three or more generations.

Further, in the embodiment, for example, as a hardware structure of a processing unit that executes various processing such as the determination unit 40 and the controller 42, the following various processors may be used. The various processors include, as described above, a CPU, which is a general-purpose processor that functions as various processing units by executing software (program), and a dedicated electric circuit, which is a processor having a circuit configuration specifically designed to execute a specific processing, such as a programmable logic device (PLD) or an application specific integrated circuit (ASIC) that is a processor of which the circuit configuration may be changed after manufacturing such as a field programmable gate array (FPGA).

One processing unit may be configured by one of these various processors, or may be configured by a combination of two or more processors of the same type or different types (for example, a combination of a plurality of FPGAs or a combination of a CPU and an FPGA). Further, the plurality of processing units may be configured by one processor.

As an example in which the plurality of processing units are configured by one processor, firstly, as represented by a computer such as a client and a server, a form in which one processor is configured by a combination of one or more CPUs and software and the processor functions as the plurality of processing units may be adopted. Secondly, as represented by a system on chip (SoC) or the like, a form in which a processor that realizes the function of the entire system including the plurality of processing units by one integrated circuit (IC) chip is used may be adopted. As described above, the various processing units are configured by using one or more various processors as a hardware structure.

Further, as the hardware structure of the various processors, more specifically, an electric circuit (circuitry) in which circuit elements such as semiconductor elements are combined may be used.

Further, in the embodiment, an example in which the information processing program 30 is stored (installed) in the storage unit 22 in advance has been described. On the other hand, the present disclosure is not limited thereto. The information processing program 30 may be provided by being recorded in a recording medium such as a compact disc read only memory (CD-ROM), a digital versatile disc read only memory (DVD-ROM), or a Universal Serial Bus (USB) memory. Further, the information processing program 30 may be downloaded from an external device via a network.

### Explanation of References

10: information processing system
12: information processing apparatus
14: tape library
18: tape drive
20: CPU
21: memory
22: storage unit
23: display
24: input device
25: network I/F
26: external I/F
27: bus
30: information processing program
32: tape management table
40: determination unit
42: controller
SP: storage pool
T: magnetic tape

## Claims

1. An information processing apparatus comprising:
at least one processor that performs control of migrating data recorded in a plurality of storage pools in which the same data is recorded and each of which includes a plurality of generations of magnetic tapes,
wherein the processor is configured to, in a case of performing control of migrating data from a relatively-old-generation magnetic tape as a migration-source magnetic tape included in one storage pool of the plurality of storage pools to relatively-new-generation magnetic tapes as migration-destination magnetic tapes included in each of the plurality of storage pools, exclude, from migration targets, data recorded in a relatively-new-generation magnetic tape included in a storage pool to which the migration-destination magnetic tape belongs.

2. The information processing apparatus according to claim 1,
wherein the processor is configured to exclude, from the migration targets, a storage pool in which a total value of free capacities of relatively-new-generation magnetic tapes is smaller than a threshold value among the plurality of storage pools.

3. The information processing apparatus according to claim 2,
wherein the threshold value is set according to capacities of the relatively-new-generation magnetic tapes.

4. The information processing apparatus according to claim 2,
wherein the threshold value is set according to a data size of the migration targets recorded in the migration-source magnetic tape.

5. An information processing method executed by at least one processor of an information processing apparatus, the processor performing control of migrating data recorded in a plurality of storage pools in which the same data is recorded and each of which includes a plurality of generations of magnetic tapes, the method comprising:
in a case of performing control of migrating data from a relatively-old-generation magnetic tape as a migration-source magnetic tape included in one storage pool of the plurality of storage pools to relatively-new-generation magnetic tapes as migration-destination magnetic tapes included in each of the plurality of storage pools, excluding, from migration targets, data recorded in a relatively-new-generation magnetic tape included in a storage pool to which the migration-destination magnetic tape belongs.

6. The information processing method according to claim 5, the method further comprising:
excluding, from the migration targets, a storage pool in which a total value of free capacities of relatively-new-generation magnetic tapes is smaller than a threshold value among the plurality of storage pools.

7. The information processing method according to claim 6,
wherein the threshold value is set according to capacities of the relatively-new-generation magnetic tapes.

8. The information processing method according to claim 6,
wherein the threshold value is set according to a data size of the migration targets recorded in the migration-source magnetic tape.

9. A computer-readable storage medium storing an information processing program causing at least one processor of an information processing apparatus to execute a process, the processor performing control of migrating data recorded in a plurality of storage pools in which the same data is recorded and each of which includes a plurality of generations of magnetic tapes, the process comprising:
in a case of performing control of migrating data from a relatively-old-generation magnetic tape as a migration-source magnetic tape included in one storage pool of the plurality of storage pools to relatively-new-generation magnetic tapes as migration-destination magnetic tapes included in each of the plurality of storage pools, excluding, from migration targets, data recorded in a relatively-new-generation magnetic tape included in a storage pool to which the migration-destination magnetic tape belongs.

10. The computer-readable storage medium storing the information processing program according to claim 9, the process further comprising:
excluding, from the migration targets, a storage pool in which a total value of free capacities of relatively-new-generation magnetic tapes is smaller than a threshold value among the plurality of storage pools.

11. The computer-readable storage medium storing the information processing program according to claim 10,
wherein the threshold value is set according to capacities of the relatively-new-generation magnetic tapes.

12. The computer-readable storage medium storing the information processing program according to claim 10,
wherein the threshold value is set according to a data size of the migration targets recorded in the migration-source magnetic tape.
